# EUROPEAN PATENT APPLICATION

(11) **EP 1 278 144 A2**
(43) Date of publication of application: **22.01.2003**
(21) Application number: 02013557.0
(22) Date of filing: 19.06.2002
(51) Int. Cl.: G06F 17/60

(54) **Method and apparatus for entry and editing of spreadsheet formulas**

(30) Priority: 22.06.2001 US 887873
(71) Applicant: SUN MICROSYSTEMS, INC., Palo Alto, California 94303 (US)
(72) Inventor: Bergman, Eric D., Palo Alto, Califonia 94301 (US); Rank, Paul J., San Jose, California 95124 (US)
(74) Representative: HOFFMANN - EITLE

(57) **Abstract**

The present invention provides a method and apparatus for entry and editing of spreadsheet formulas. In one embodiment, a user is able to complete editing a formula by selecting another cell. If the user selects another cell while editing a formula, it is determined whether entering a reference to the cell at that point in the formula is appropriate. If entering a reference to the cell at that point in the formula is inappropriate, formula editing is terminated and the selected cell becomes the active cell. In one embodiment, a formula toolbar is displayed when a formula is edited. A user selects buttons on the formula toolbar to insert operators or functions into the formula. In one embodiment, a spreadsheet is displayed on a touch sensitive display. Formulas are edited using the touch sensitive display. In one embodiment, the touch sensitive display is the display of a PDA.

## Description

### BACKGROUND OF THE INVENTION

### 1. FIELD OF THE INVENTION

The present invention relates to the field of data entry, and in particular to a method and apparatus for entry and editing of spreadsheet formulas.

Sun, Sun Microsystems, the Sun logo, Solaris and all Java-based trademarks and logos are trademarks or registered trademarks of Sun Microsystems, Inc. in the United States and other countries. All SPARC trademarks are used under license and are trademarks of SPARC International, Inc. in the United States and other countries. Products bearing SPARC trademarks are based upon an architecture developed by Sun Microsystems, Inc.

### 2. BACKGROUND ART

Spreadsheet programs typically allow users to enter formulas into cells of a spreadsheet file. A cell is typically activated using a pointing device (e.g., a mouse) or using a touch sensitive display as an input device (e.g., the display screen of a personal digital assistant). Functions, fixed data and data from other cells are sometimes incorporated into a formula. Typically, references to other cells are made by selecting the cell during the formula entry process. To complete entry of a formula, the user typically must explicitly indicate the formula is complete. For example, the user may be required to press the enter key to indicate completion of a formula. This method of formula completion is inefficient because every instance of editing a function must be accompanied by the step of explicitly terminating the editing process. This problem can be better understood with a review of spreadsheets.

### Spreadsheets

A spreadsheet file contains a collection of data tabulated in a grid or matrix. Typically, the grid is numbered horizontally starting from "A", and numbered vertically starting from "1". Each space in the grid is termed a cell and can contain text, a number, a date, a time, special symbols, etc. The relationship between the cells can sometimes be controlled by formulas. For example, one spreadsheet contains the employee workweek of a company, including name of employees, their hourly rates, number of hours worked in the week, payroll deductions like FICA and SDI, and the gross and net pays. So, for example, the net pay is calculated using the formula (hours worked * rate/hour) - (FICA + SDI). Changing the value in the rate/hour column or the hours worked column automatically changes the value in gross pay, net pay, FICA, and SDI columns because they are all dependent, through formulas, on the rate/hour as well as hours worked.

### PDA

Spreadsheet programs are commonly used on personal digital assistants. A personal digital assistant is a small computer-like device, which typically has a base housing, an input mechanism, and a miniature display screen. The typical configuration of the PDA mounts these components on the topside of the device. The base housing of the PDA contains a small microprocessor, limited data storage and memory areas, a storage battery, and other various miniature electronic components. The electronic components and other features vary depending on the particular model and manufacturer of the PDA.

The input mechanisms of some PDAs utilize a miniature keyboard. Alternatively, the miniature display screen mounted on the PDA is able to operate as an input mechanism. When acting as an input mechanism, the display screen uses a pen-like stylus or other writing implement to introduce input via the display screen. The display assembly senses the position of the tip of the stylus on the viewing screen and provides this positional information to the central processing unit of the PDA. In addition to sensing motion commands, some display assemblies can also sense varying degrees of pressure that the stylus places on the screen of the PDA.

On the other hand, the display screen is also able to operate as an output mechanism. The output of the PDA has many forms. For example, one form of visual output includes graphic and/or textual images that the PDA presents to the user on the display screen. Another form of output is in the form of sound that the PDA provides to the user through a speaker. Additionally, some PDAs can package information for output through cable or wireless networks.

Conventional PDAs also contain an operating system and preloaded programs, such as spreadsheet, e-mail, calendar, memo list, stylus pen applications, and other related applications. The increasing popularity of PDAs stems from their relatively low cost and extreme portability compared to much larger desktop general purpose computers ("desktop computers"). Many users find that for simple computing tasks during trips and other periods of being away from their larger computers, the bulk and computing power of even a compact notebook computer are simply not needed.

### Formula

A formula might be used when using a spreadsheet program. A formula is a combination of signs in a logical calculus, or a general fact, rule, or principle expressed in usually mathematical symbols. For example, to calculate the area of a two dimensional object, certain symbols and rules are needed. Hence to calculate the area of a circle, we need the product of the constant Pi (approximately equal to 3.142857) and the square of the radius of the circle. The square of the radius can be calculated in one of two ways: a) by multiplying the radius by itself once, or b) by using the Square function. The code to calculate the area is very different for both the above options. If a) is chosen, then the C code may look like:

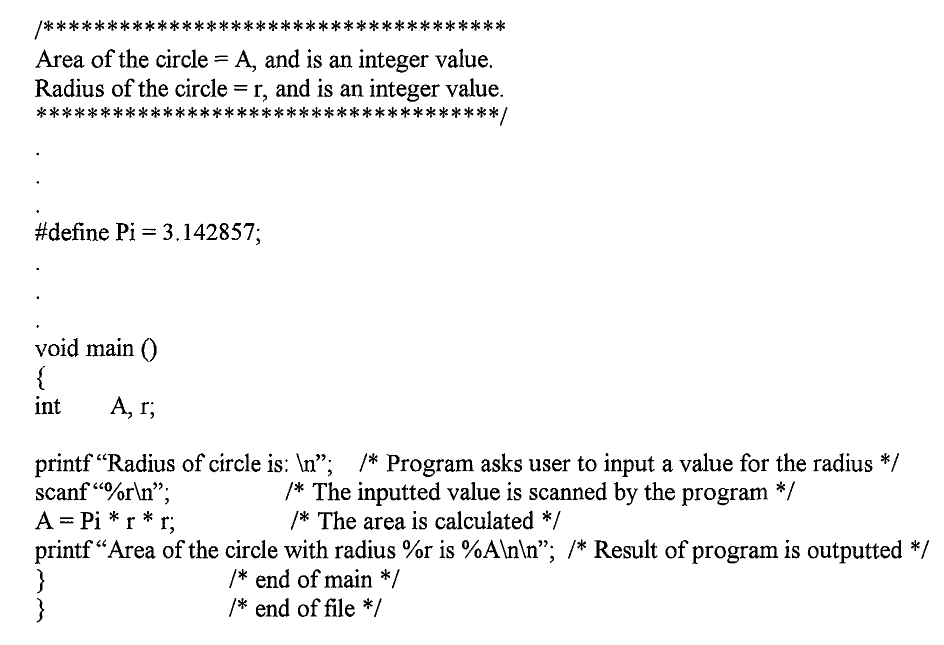

If on the other hand option b) is chosen, then the C code using the Square function would look like:

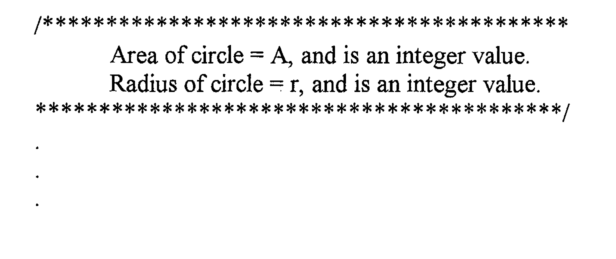

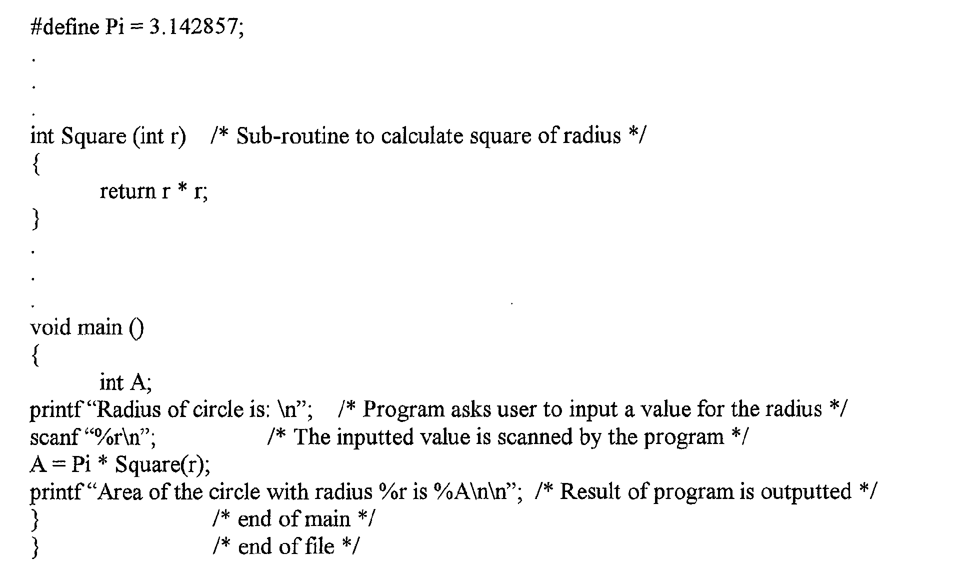

The multiplication function code may in turn be written in terms of addition to cut down on system time and memory. Hence, for example, 2 times 3 could be written as 2 * 3, or 2 + 2 + 2. The formula to calculate the area of a circle is an example which either uses just the multiplication operation (which in turn can use the addition operation), or uses a combination of the multiplication and square operations. Other complex formulas can run into several pages of C code, using several complex functions, numerous operations and universal symbols like Pi.

### Formula Entry/Editing

In a prior art method of formula entry in a typical spreadsheet program, a user first selects a cell. The user may select the cell by positioning a pointer over it and selecting the cell using a pointing device. The user may also select the cell by pressing keys which move a cursor to the cell to be selected. Additionally, a user may touch the portion of the touch screen display that the cell occupies to select the cell. The cell can also be selected by a number of equivalent methods of activating a cell in a typical spreadsheet program.

If the cell does not already contain a formula, the user begins editing a formula by inputting a formula indicator. For example, the user may press "=" on a keyboard. Then, the user proceeds to edit the formula. The formula may contain references to other cells. When the user desires to input a reference to another cell into a formula, the user selects the cell and a reference to the cell is input in the formula. If the user inputs a reference to a cell into a formula and immediately selects another cell when no cell is anticipated in the formula, in some prior art systems, a reference to the second cell replaces the reference to the first cell. To complete editing the formula, the user must input an explicit formula terminator (e.g., pressing an enter key or selecting a button that completes the formula).

Thus, to edit a series of formulas in a series of cells, the user must select the cell, input the formula indicator if necessary, edit the formula, input the formula terminator and select the next cell. Often, when a user uses a touch sensitive display to edit formulas, the user must draw operators (e.g., +, -, / and *) by hand. In some implementations, entering an operator involves the user making one or more handwritten strokes on the touch sensitive display. These stroke may resemble the operator, but a glyph which does not resemble the operator may be used instead in some embodiments.

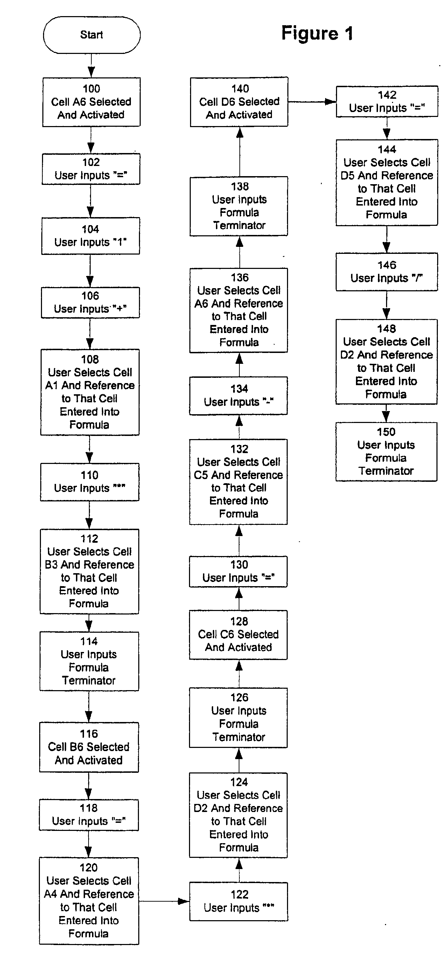

Figure 1 illustrates a prior art process of entering a series of functions in a series of cells. When the process is initiated, cells A6, B6, C6 and D6 are empty. The formula "=1+A1*B3" is to be entered into cell A6. The formula "=A4*D2" is to be entered into cell B6. The formula "=C5-A6" is to be entered into cell C6. Finally, the formula "=D5/D2" is to be entered into cell D6. At operation 100, cell A6 is selected and activated. At operation 102, the user inputs an "=". At operation 104, the user inputs a "1". At operation 106, the user inputs a "+". At operation 108, the user selects cell A1 and a reference to that cell is entered into the formula. At operation 110, the user inputs an "*". At operation 112, the user selects cell B3 and a reference to that cell is entered into the formula. At operation 114, the user inputs a formula terminator (e.g., presses return or inputs another "=").

At operation 116, cell B6 is selected and activated. At operation 118, the user inputs an "=". At operation 120, the user selects cell A4 and a reference to that cell is entered into the formula. At operation 122, the user inputs an "*". At operation 124, the user selects cell D2 and a reference to that cell is entered into the formula. At operation 126, the user inputs a formula terminator.

At operation 128, cell C6 is selected and activated. At operation 130, the user inputs an "=". At operation 132, the user selects cell C5 and a reference to that cell is entered into the formula. At operation 134, the user inputs an "-". At operation 136, the user selects cell A6 and a reference to that cell is entered into the formula. At operation 138, the user inputs a formula terminator.

At operation 140, cell D6 is selected and activated. At operation 142, the user inputs an "=". At operation 144, the user selects cell D5 and a reference to that cell is entered into the formula. At operation 146, the user inputs an "/". At operation 148, the user selects cell D2 and a reference to that cell is entered into the formula. At operation 150, the user inputs a formula terminator.

### SUMMARY OF THE INVENTION

It is an object of the invention to provide for improved editing of a spreadsheet formula requiring reduced user interaction.

According to an embodiment, a method for editing a spreadsheet formula may comprise: activating a first cell; selecting a second cell in response to user input; determining whether a reference to said second cell is appropriate for entry into a formula in said first cell; storing a current formula in said first cell, if said reference is not appropriate for entry into said formula in said first cell; and activating said second cell, if said reference is not appropriate for entry into said formula in said first cell.

A formula toolbar may be displayed when said formula is edited and/or said formula toolbar may be closed when said formula is no longer being edited.

Said formula toolbar may comprise: at least one mathematical operator, at least one function operator and/or a function dialogue may be displayed when said function operator is selected.

Said reference may be entered in said formula, if said reference is appropriate for entry into said formula in said first cell.

According to another embodiment a method for formula editing comprises: selecting a cell; and entering an editing mode, when an appropriate reference for said formula exists in another selected cell.

Said entering may comprise: entering an editing mode, if a user inputs a formula initiator, and/or displaying a formula toolbar.

According to another embodiment a method for formula entry may comprise: activating a formula entry area; obtaining an input from a user; determining whether said input is appropriate for entry into a formula in said formula entry area; and storing a current formula in said formula entry area, if said input is not appropriate for entry into said formula.

Said formula may be a search query.

According to another embodiment, a program may be provided having instructions adapted to make a computer carry out at least one of the above operations. A computer readable medium, may comprise the program.

According to another embodiment, a spreadsheet formula editor may comprise: a first activation device configured to activate a first cell; a selection device configured to select a second cell in response to user input; a determiner configured to determine whether a reference to said second cell is appropriate for entry into a formula in said first cell; a storage unit configured to store a current formula in said first cell, if said reference is not appropriate for entry into said formula in said first cell; and a first activation device configured to activate said second cell, if said reference is not appropriate for entry into said formula in said first cell.

According to another embodiment, a formula editor may comprise: a first a selection device configured to select a cell; and an editing mode configured to be entered when an appropriate reference for said formula exists in another selected cell.

According to another embodiment, a formula editor may comprise: an activation device configured to activate a formula entry area; input from a user configured to be obtained; a determiner configured to determine whether said input is appropriate for entry into a formula in said formula entry area; and a storage unit configured to store a current formula in said formula entry area, if said input is not appropriate for entry into said formula in said formula entry area.

According to another embodiment, a computer program product may comprise: a computer usable medium having computer readable program code embodied therein configured to edit a spreadsheet formula, said computer program product comprising: computer readable code configured to cause a computer to activate a first cell; computer readable code configured to cause a computer to select a second cell in response to user input; computer readable code configured to cause a computer to determine whether a reference to said second cell is appropriate for entry into a formula in said first cell; computer readable code configured to cause a computer to store a current formula in said first cell, if said reference is not appropriate for entry into said formula in said first cell; and computer readable code configured to cause a computer to activate said second cell, if said reference is not appropriate for entry into said formula in said first cell.

According to another embodiment, a computer program product may comprise: a computer usable medium having computer readable program code embodied therein configured to edit a formula, said computer program product comprising: computer readable code configured to cause a computer to select a cell; and computer readable code configured to cause a computer to enter an editing mode, when an appropriate reference for said formula exists in another selected cell.

According to another embodiment, a computer program product may comprise: a computer usable medium having computer readable program code embodied therein configured to edit a formula, said computer program product comprising: computer readable code configured to cause a computer to activate a formula entry area; computer readable code configured to cause a computer to obtain an input from a user; computer readable code configured to cause a computer to determine whether said input is appropriate for entry into said formula in said formula entry area; and computer readable code configured to cause a computer to store a current formula in said formula entry area, if said input is not appropriate for entry into said formula in said formula entry area.

Further advantageous embodiments of the invention are disclosed in further claims.

### BRIEF DESCRIPTION OF THE DRAWINGS

These and other features, aspects and advantages of the present invention will become better understood with regard to the following description, appended claims and accompanying drawings where:
- Fig. 1: is a flow diagram of a prior art process of entering a series of functions in a series of cells.
- Fig. 2: is a block diagram of a spreadsheet running on a PDA in accordance with one embodiment of the present invention.
- Fig. 3: is a flow diagram of the process of editing a cell in accordance with one embodiment of the present invention.
- Fig. 4: is a block diagram of a spreadsheet running on a PDA in accordance with one embodiment of the present invention.
- Fig. 5: is a flow diagram of the process of editing a cell in accordance with one embodiment of the present invention.
- Fig. 6: is a block diagram of a general purpose computer.
- Fig. 7: is a hardware apparatus according to an embodiment of the present invention.

### DETAILED DESCRIPTION OF THE INVENTION

Embodiments of the invention are for entry and editing of spreadsheet formulas. In the following description, numerous specific details are set forth to provide a more thorough description of embodiments of the invention. It is apparent, however, to one skilled in the art, that the invention may be practiced without these specific details. In other instances, well known features have not been described in detail so as not to obscure the invention.

The present invention provides a method and apparatus for entry and editing of spreadsheet formulas. In one embodiment of the present invention, a user is able to complete editing a formula by selecting another cell. If the user selects another cell while editing a formula, it is determined whether entering a reference to the cell at that point in the formula is appropriate. If entering a reference to the cell at that point in the formula is inappropriate, formula editing is terminated and the selected cell becomes the active cell.

In one embodiment, a formula toolbar is displayed when a formula is edited. A user selects buttons on the formula toolbar to insert operators or functions into the formula. In one embodiment, the formula toolbar is not displayed when no formula is being edited. In one embodiment, a spreadsheet is displayed on a touch sensitive display. Formulas are edited using the touch sensitive display. In one embodiment, the touch sensitive display is the display of a PDA.

### Terminating Formula Editing by Selecting Another Cell

In one embodiment of the present invention, a user is able to complete editing a formula by selecting another cell. If the user selects another cell while editing a formula, it is determined whether entering a reference to the cell at that point in the formula is appropriate. If entering a reference to the cell at that point in the formula is inappropriate, formula editing is terminated and the selected cell becomes the active cell. Thus, a user can edit a series of formulas in a series of cells without explicitly terminating formula editing for each cell. If N formulas are edited, the embodiment enables to edit the formulas with N-1 fewer actions than prior art methods.

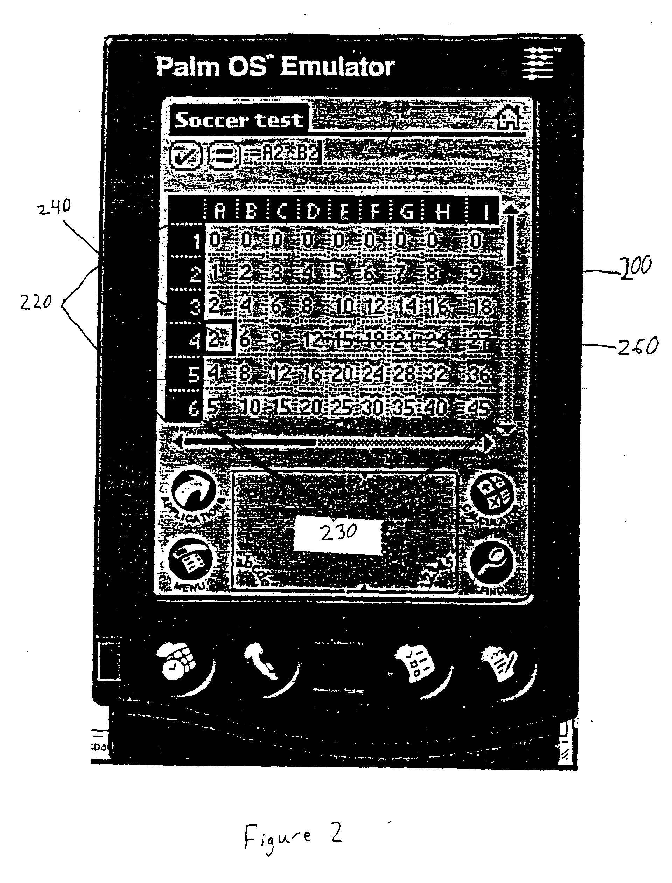

Fig. 2 illustrates a spreadsheet running on a PDA in accordance with one embodiment of the present invention. The PDA 200 displays a portion of a spreadsheet 210. Rows 1 through 6 220 and columns A through I 230 are displayed. Cell A4 240 is selected, and contains the formula 250 "=A2*B2". Adding another cell reference into the formula as it is would not be appropriate. Thus, if the user selects cell D4 260, cell D4 will become the active cell. Additionally, the formula "=A2*B2" will be entered as the contents of cell A4. However, if the user enters an operator, for example "+", so that the formula is "=A2*B2+" and the user, then, selects cell D4, a reference to cell D4 is entered into the formula, which becomes "=A2*B2+D4".

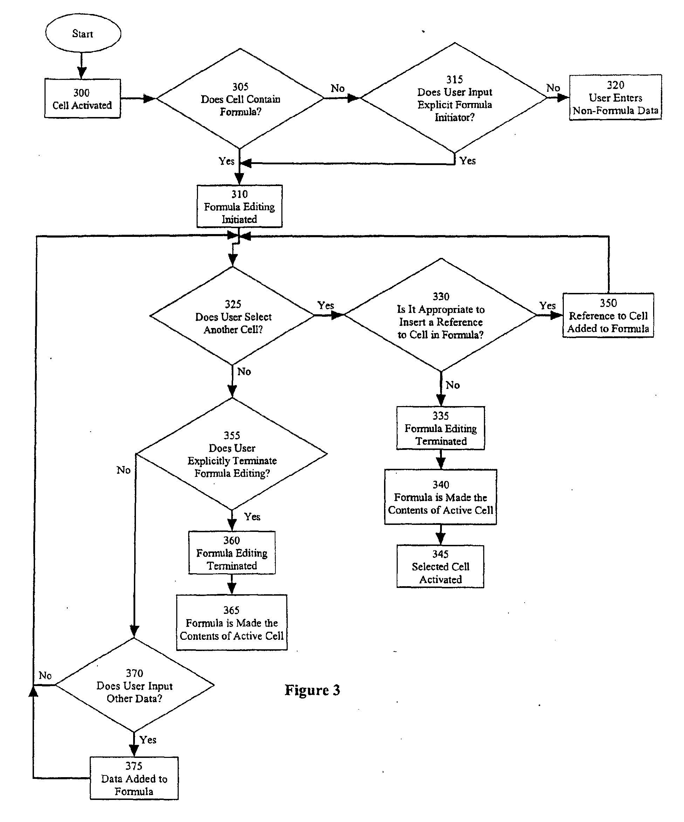

Fig. 3 illustrates the process of editing a cell in accordance with one embodiment of the present invention. At operation 300, the cell is activated. A cell can be activated by positioning a pointing device over the cell and selecting the cell. Tapping on the cell's location using a touch-sensitive display, the display screen of a PDA for example, is another means for activating a cell. Additionally, a user may activate a cell by pressing cursor keys to move the active cell indicator to the desired cell. Activating a cell makes the cell ready to receive input. In some cases, the input will be a formula. Editing of the formula may be initiated automatically if the cell already contains a formula. Alternatively, the user may input a formula initiator (e.g., an "=") through a keyboard, pointing device or touch-sensitive display to initiate editing of a formula for the cell.

At operation 305, it is determined whether the cell contains a formula. If the cell contains a formula, at operation 310, formula editing is initiated and the process continues at operation 325. If the cell does not contain a formula, at operation 315, it is determined whether the user inputs an explicit formula initiator (e.g., an "=" sign). If the user does not input an explicit formula initiator, at operation 320, the user enters non-formula data. If the user does input an explicit formula initiator, the process continues at operation 310.

At operation 325, it is determined whether the user selects another cell. The user may select another cell using a keyboard, pointing device or touch-sensitive display, similar to the means used to activate a cell in operation 300. If the user selects another cell, at operation 330, it is determined whether it is appropriate to insert a reference to the cell in the formula. Formulas typically have a syntax which must be followed. Thus, if the syntax allows a cell reference in the active portion of the formula, inserting a reference to the cell is appropriate. If the syntax does not allow a cell reference in the active portion of the formula, inserting a reference to the cell is not appropriate.

If it is not appropriate to insert a reference to the cell in the formula, at operation 335, formula editing is terminated. At operation 340, the formula is stored as the contents of the active cell. At operation 345, the selected cell is activated.

If it is appropriate to insert a reference to the cell in the formula, at operation 350, a reference to the cell is added to the formula and the process repeats at operation 325. If at operation 325 the user does not select another cell, at operation 355, it is determined whether the user explicitly terminates formula editing. The user may explicitly terminate formula editing by selecting a terminator button (e.g., a check mark button or an equals button). In embodiments where data may be entered through a keyboard, the user may also explicitly terminate formula editing by inputting a return or other termination indicator.

If the user explicitly terminates formula editing, at operation 360, formula editing is terminated. At operation 365, the formula is stored as the contents of the active cell. If the user does not explicitly terminate formula editing, at operation 370, it is determined whether the user inputs other data. Text, numbers, functions and operators are examples of other data the user may input. If the user inputs other data, at operation 375, the data is added to the formula and the process continues at operation 325. If the user does not input other data, the process continues at operation 325.

### Context Based Cell Reference Insertion

In one embodiment, the determination of whether selecting a cell terminates formula editing is based on formula syntax and the current context of the function. Functions are entered according to a syntax. For example, a formula syntax may specify that "Polish notation" be used. The syntax for addition using Polish notation requires an addition operator, "+", followed by two arguments. The arguments may be references to cells.

Thus, a formula adding cell A4 to cell B2 is entered as "=+ A4 B2". After the "=" and "+" are entered, it a reference to a cell is allowed according to the syntax. Thus, selecting cell A4 will enter a reference to cell A4 into the formula. Then, the syntax still allows another cell reference. Thus, selecting cell B2 will enter a reference to cell B2 into the formula. However, at this point, the syntax does not allow another cell reference to be entered. Thus, if a user selects another cell, the formula "=+ A4 B2" is stored in the old cell and the selected cell is activated.

Using a different syntax, the addition operator, "+", is preceded and succeeded by arguments which may be references to cells. Thus, the above formula becomes "=A4 + B2". Therefor, after B2 is selected, immediately selecting another cell will terminate editing of the formula and activate the selected cell.

### Formula Toolbar

In one embodiment, a formula toolbar is displayed when a formula is edited. A user selects buttons on the formula toolbar to insert operators or functions into the formula. In one embodiment, the formula toolbar is not displayed when no formula is being edited. In one embodiment, a spreadsheet is displayed on a touch sensitive display. Formulas are edited using the touch sensitive display. In one embodiment, the touch sensitive display is the display of a PDA.

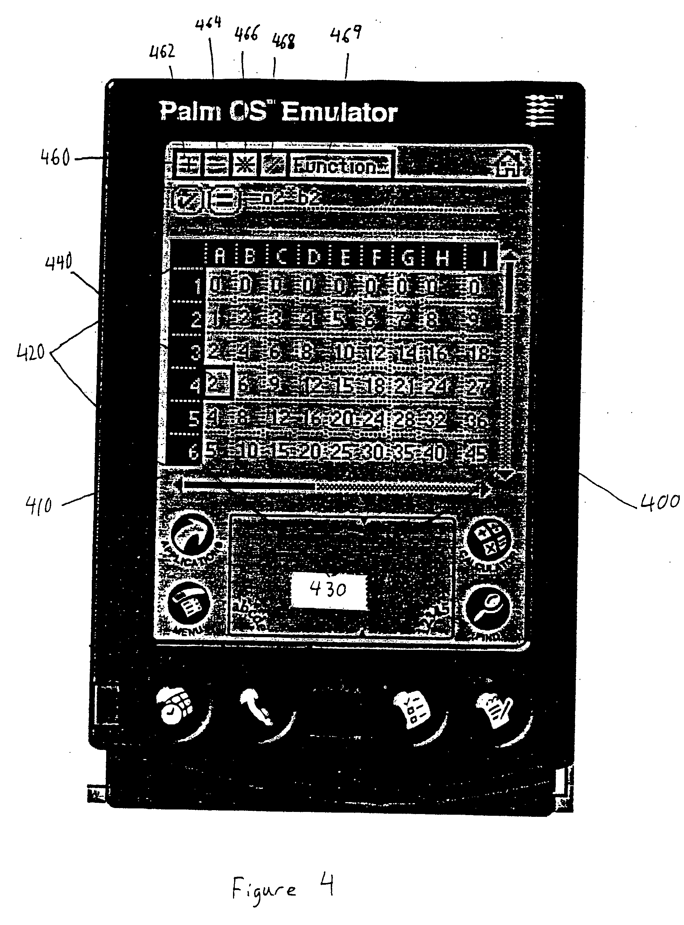

Fig. 4 illustrates a spreadsheet running on a PDA in accordance with one embodiment of the present invention. The PDA 400 displays a portion of a spreadsheet 410. Rows 1 through 6 420 and columns A through I 430 are displayed. Cell A4 440 is selected, and contains the formula 450 "=a2*b2". Since the formula is being edited, a formula toolbar 460 is available. The formula toolbar contains buttons for operators "+" 462, "-" 464, "*" 466 and "/" 468 as well as a function button 469. However, the formula toolbar is not limited to this configuration of operators and functions. The formula toolbar can be configured to display any set of operators the user may enter more frequently than other functions. Thus, the user is able to enter the function by simply selecting its corresponding button on the formula toolbar.

If the user selects one of the operators from the formula toolbar, the operator is entered into the formula. If the user selects the function button, a dialogue for entering functions is displayed. The function dialogue displays a list of buttons corresponding to functions (e.g., sin, cos, sum, x^y, "(", ")", etc.) the user may wish to use in a formula. In one embodiment, the function dialogue also has a button which allows the user to scroll to other functions which are not currently displayed. In one embodiment, the function toolbar does not occlude any cell when displayed. In the embodiment of Fig. 4, the formula toolbar is displayed at the top of the screen, where cells are not displayed.

Adding another cell reference into the formula as it is in Fig. 4 would not be appropriate. Thus, if the user selects cell D4 470, cell D4 will become the active cell. Additionally, the formula "=a2*b2" will be entered as the contents of cell A4 and the formula toolbar is closed.

However, if the user enters an operator, for example "+", so that the formula is "=a2*b2+" and the user, then, selects cell D4, a reference to cell D4 is entered into the formula, which becomes "=a2*b2+d4".

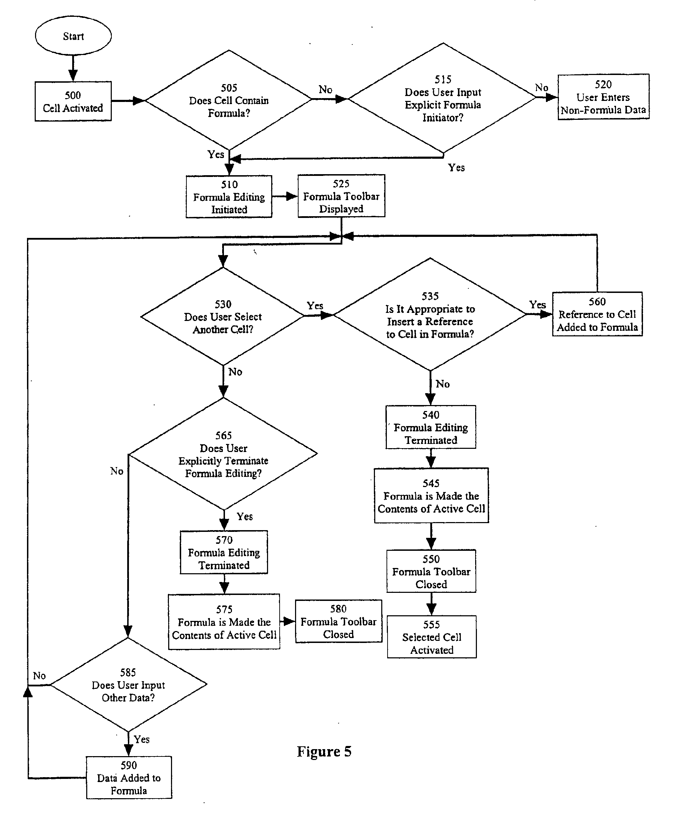

Fig. 5 illustrates the process of editing a cell in accordance with one embodiment of the present invention. At operation 500, the cell is activated. A cell can be activated by positioning a pointing device over the cell and selecting the cell. Tapping on the cell's location using a touch-sensitive display, the display screen of a PDA for example, is another means for activating a cell. Additionally, a user may activate a cell by pressing cursor keys to move the active cell indicator to the desired cell. Activating a cell makes the cell ready to receive input. In some cases, the input will be a formula. Editing of the formula may be initiated automatically if the cell already contains a formula. Alternatively, the user may input a formula initiator (e.g., an "=") through a keyboard, pointing device or touch-sensitive display to initiate editing of a formula for the cell.

At operation 505, it is determined whether the cell contains a formula. If the cell contains a formula, at operation 510, formula editing is initiated and the process continues at operation 525. If the cell does not contain a formula, at operation 515, it is determined whether the user inputs an explicit formula initiator (e.g., an "=" sign). If the user does not input an explicit formula initiator, at operation 520, the user enters non-formula data. If the user does input an explicit formula initiator, the process continues at operation 510.

At operation 525, the formula toolbar is displayed. At operation 530, it is determined whether the user selects another cell. The user may select another cell using a keyboard, pointing device or touch-sensitive display, similar to the means used to activate a cell in operation 500. If the user selects another cell, at operation 535, it is determined whether it is appropriate to insert a reference to the cell in the formula. Formulas typically have a syntax which must be followed. Thus, if the syntax allows a cell reference in the active portion of the formula, inserting a reference to the cell is appropriate. If the syntax does not allow a cell reference in the active portion of the formula, inserting a reference to the cell is not appropriate.

If it is not appropriate to insert a reference to the cell in the formula, at operation 540, formula editing is terminated. At operation 545, the formula is stored as the contents of the active cell. At operation 550, the formula toolbar is closed. At operation 555, the selected cell is activated.

If it is appropriate to insert a reference to the cell in the formula, at operation 560, a reference to the cell is added to the formula and the process repeats at operation 530. If at operation 530 the user does not select another cell, at operation 565, it is determined whether the user explicitly terminated formula editing. The user may explicitly terminate formula editing by selecting a terminator button (e.g., a check mark button or an equals button). The user may also explicitly terminate formula editing by inputting a terminator by other standard means (e.g., entering a return using a keyboard, drawing an "=" glyph or drawing another terminator glyph).

If the user explicitly terminates formula editing, at operation 570, formula editing is terminated. At operation 575, the formula is stored as the contents of the active cell. At operation 580, the formula toolbar is closed. If the user does not explicitly terminate formula editing, at operation 585, it is determined whether the user inputs other data. Text, numbers, functions and operators are examples of other data the user may input. The user may enter functions and operators by selecting corresponding buttons on the formula toolbar. The user may also enter functions and operators using the traditional glyph method of entry. If the user inputs other data, at operation 590, the data is added to the formula and the process continues at operation 530. If the user does not input other data, the process continues at operation 530.

### Non-Spreadsheet Formula Entry

One embodiment of the present invention is directed to entry of formulas in non-spreadsheet applications. In one embodiment, a user enters a search query by entering a sequence of operators and arguments. When the user inputs a data item which is inappropriate given the syntax of acceptable search queries, editing of the search query is terminated. In other embodiments, context-based formula editing termination is used in other applications.

According to another embodiment, a spreadsheet formula editor is provided. The formula editor comprises a first activation device configured to activate a first cell; a selection device configured to select a second cell in response to user input; a determiner configured to determine whether a reference to said second cell is appropriate for entry into a formula in said first cell; a storage unit configured to store a current formula in said first cell, if said reference is not appropriate for entry into said formula in said first cell; and a first activation device configured to activate said second cell, if said reference is not appropriate for entry into said formula in said first cell.

In one embodiment, the spreadsheet formula editor forms an integral part of a computing device such as a PDA.

The spreadsheet formula editor may further comprise a formula toolbar wherein said formula toolbar is displayed when said formula is edited and said formula toolbar is closed when said formula is no longer being edited.

Further, the formula toolbar may comprise at least one mathematical operator and/or at least one function operator, wherein the function dialogue is displayed when said function operator is selected.

Still further, the reference may be entered in said formula, if said reference is appropriate for entry into said formula in said first cell.

According to another embodiment, a formula editor may comprise a selection device configured to select a cell; and an editing mode configured to be entered when an appropriate reference for said formula exists in another selected cell.

The mode selector may comprise a display unit configured to display a formula toolbar.

Said editing mode may be configured to be entered, if a user inputs a formula initiator, and the second mode selector may comprise a display unit configured to display a formula toolbar.

According to another embodiment, a formula editor may comprise a an activation device configured to activate a formula entry area; input from a user configured to be obtained; a determiner configured to determine whether said input is appropriate for entry into a formula in said formula entry area; and a storage unit configured to store a current formula in said formula entry area, if said input is not appropriate for entry into said formula in said formula entry area.

The formula may be a search query.

It is noted that a computer-readable medium may be provided having a program embodied thereon, where the program is to make a computer or a system of data processing devices to execute functions or operations of the features and elements of the above described examples. A computer-readable medium can be a magnetic or optical or other tangible medium on which a program is recorded, but can also be a signal, e.g. analog or digital, electronic, magnetic or optical, in which the program is embodied for transmission. Further, a computer program product may be provided comprising the computer-readable medium.

### Hardware Apparatus Embodiment

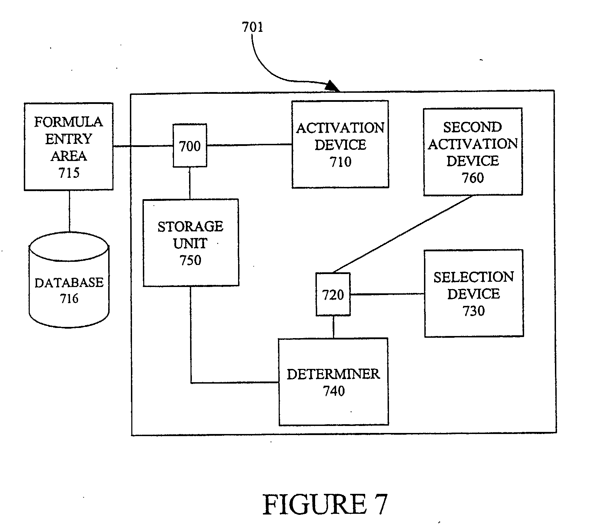

One embodiment of the present invention is implemented as a series of hardware units that are shown in Figure 7. Within hardware unit 701, a first cell 700 is activated by an activation device 710, which might include a pointing device, a keyboard, a user putting pressure on a touch-sensitive display, or using a stylus on the display screen of a PDA. Once the first cell is activated, a formula entry area 715 is opened. The formula entry area 715 might comprise any type of graphical user interface configured to receive input from a user relating to a spreadsheet formula. In one embodiment, the formula entry area comprises a graphical depiction of the cell and allows the user to input data into the cell, which is transferred to a database 716, for long-term storage.

Next, a second cell 720 is selected based on user input using a selection device 730, which might include a keyboard, pointing device or touch-sensitive display, for instance. A determiner 740 is used to determine whether it is appropriate to insert a reference to the second cell in the formula. The determiner might comprise a computer program or other logic within the computing device.

If the reference is not appropriate, a storage unit 750 is used to store the current formula in the first cell 700 and a second activation device 760 is used to activate the second cell 720. The storage device might be a database, a disk drive, a random access memory (RAM), or other storage device. If the reference is appropriate the apparatus terminates the process.

### Embodiment of Computer Execution Environment (Hardware)

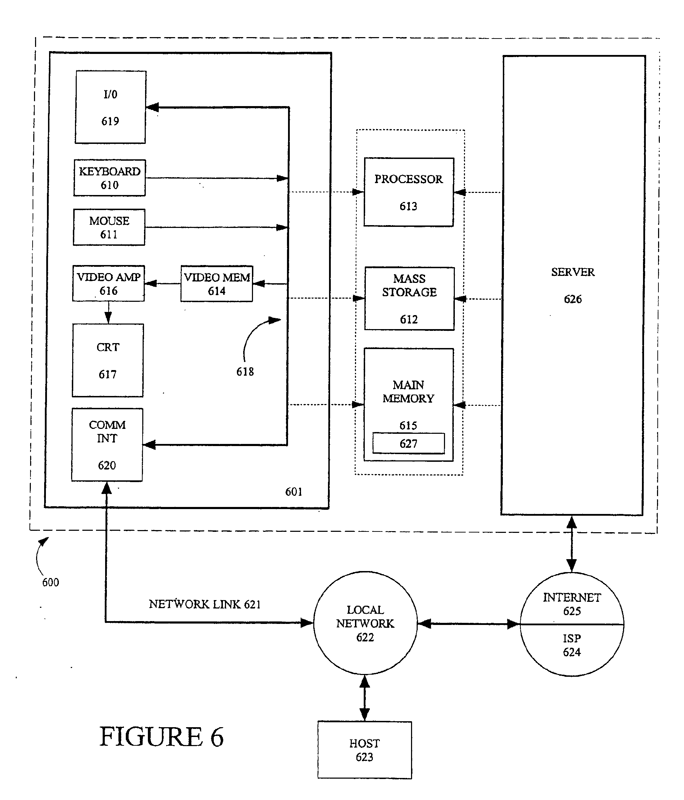

An embodiment of the invention can be implemented as computer software in the form of computer readable program code executed in a general purpose computing environment such as environment 600 illustrated in Figure 6, or in the form of bytecode class files executable within a Java™ run time environment running in such an environment, or in the form of bytecodes running on a processor (or devices enabled to process bytecodes) existing in a distributed environment (e.g., one or more processors on a network), or in the form of bytecodes running on a PDA. A keyboard 610 and mouse 611 are coupled to a system bus 618. The keyboard and mouse are for introducing user input to the computer system and communicating that user input to central processing unit (CPU) 613. Other suitable input devices, a touch-sensitive display for example, may be used in addition to, or in place of, the mouse 611 and keyboard 610. I/O (input/output) unit 619 coupled to bi-directional system bus 618 represents such I/O elements as a printer, A/V (audio/video) I/O, etc.

Computer 601 may include a communication interface 620 coupled to bus 618. Communication interface 620 provides a two-way data communication coupling via a network link 621 to a local network 622. For example, if communication interface 620 is an integrated services digital network (ISDN) card or a modem, communication interface 620 provides a data communication connection to the corresponding type of telephone line, which comprises part of network link 621. If communication interface 620 is a local area network (LAN) card, communication interface 620 provides a data communication connection via network link 621 to a compatible LAN. Wireless links are also possible. In any such implementation, communication interface 620 sends and receives electrical, electromagnetic or optical signals which carry digital data streams representing various types of information.

Network link 621 typically provides data communication through one or more networks to other data devices. For example, network link 621 may provide a connection through local network 622 to local server computer 623 or to data equipment operated by ISP 624. ISP 624 in turn provides data communication services through the world wide packet data communication network now commonly referred to as the "Internet" 625. Local network 622 and Internet 625 both use electrical, electromagnetic or optical signals which carry digital data streams. The signals through the various networks and the signals on network link 621 and through communication interface 620, which carry the digital data to and from computer 600, are exemplary forms of carrier waves transporting the information.

Processor 613 may reside wholly on client computer 601 or wholly on server 626 or processor 613 may have its computational power distributed between computer 601 and server 626. Server 626 symbolically is represented in Figure 6 as one unit, but server 626 can also be distributed between multiple "tiers". In one embodiment, server 626 comprises a middle and back tier where application logic executes in the middle tier and persistent data is obtained in the back tier. In the case where processor 613 resides wholly on server 626, the results of the computations performed by processor 613 are transmitted to computer 601 via Internet 625, Internet Service Provider (ISP) 624, local network 622 and communication interface 620. In this way, computer 601 is able to display the results of the computation to a user in the form of output.

Computer 601 includes a video memory 614, main memory 615 and mass storage 612, all coupled to bi-directional system bus 618 along with keyboard 610, mouse 611 and processor 613. As with processor 613, in various computing environments, main memory 615 and mass storage 612, can reside wholly on server 626 or computer 601, or they may be distributed between the two. Examples of systems where processor 613, main memory 615, and mass storage 612 are distributed between computer 601 and server 626 include the thin-client computing architecture developed by Sun Microsystems, Inc., the palm pilot computing device and other personal digital assistants, Internet ready cellular phones and other Internet computing devices, and in platform independent computing environments, such as those which utilize the Java technologies also developed by Sun Microsystems, Inc.

The mass storage 612 may include both fixed and removable media, such as magnetic, optical or magnetic optical storage systems or any other available mass storage technology. Bus 618 may contain, for example, thirty-two address lines for addressing video memory 614 or main memory 615. The system bus 618 also includes, for example, a 32-bit data bus for transferring data between and among the components, such as processor 613, main memory 615, video memory 614 and mass storage 612. Alternatively, multiplex data/address lines may be used instead of separate data and address lines.

In one embodiment of the invention, the processor 613 is a SPARC microprocessor from Sun Microsystems, Inc., a microprocessor manufactured by Motorola, such as the 680X0 processor, a microprocessor manufactured for use in a PDA, or a microprocessor manufactured by Intel, such as the 80X86 or Pentium processor. However, any other suitable microprocessor or microcomputer may be utilized. Main memory 615 is comprised of dynamic random access memory (DRAM), and bytecodes for one embodiment of the invention is stored in a portion 627 of main memory 615 during program execution. Video memory 614 is a dual-ported video random access memory. One port of the video memory 614 is coupled to video amplifier 616. The video amplifier 616 is used to drive the cathode ray tube (CRT) raster monitor 617. Video amplifier 616 is well known in the art and may be implemented by any suitable apparatus. This circuitry converts pixel data stored in video memory 614 to a raster signal suitable for use by monitor 617. Monitor 617 is a type of monitor suitable for displaying graphic images.

Computer 601 can send messages and receive data, including program code, through the network(s), network link 621, and communication interface 620. In the Internet example, remote server computer 626 might transmit a requested code for an application program through Internet 625, ISP 624, local network 622 and communication interface 620. The received code may be executed by processor 613 as it is received, and/or stored in mass storage 612, or other non-volatile storage for later execution. In this manner, computer 600 may obtain application code in the form of a carrier wave. Alternatively, remote server computer 626 may execute applications using processor 613, and utilize mass storage 612, and/or video memory 615. The results of the execution at server 626 are then transmitted through Internet 625, ISP 624, local network 622 and communication interface 620. In this example, computer 601 performs only input and output functions.

Application code may be embodied in any form of computer program product. A computer program product comprises a medium configured to store or transport computer readable code, or in which computer readable code may be embedded. Some examples of computer program products are CD-ROM disks, ROM cards, floppy disks, magnetic tapes, computer hard drives, servers on a network, and carrier waves.

The computer systems described above are for purposes of example only. An embodiment of the invention may be implemented in any type of computer system or programming or processing environment.

Thus, a method and apparatus for entry and editing of spreadsheet formulas is described in conjunction with one or more specific embodiments. The invention is defined by the following claims and their full scope and equivalents.

Still further, according to another embodiment, a computer program product may be provided comprising a computer usable medium having computer readable program code embodied therein configured to edit a spreadsheet formula, said computer program product comprising: computer readable code configured to cause a computer to activate a first cell; computer readable code configured to cause a computer to select a second cell in response to user input; computer readable code configured to cause a computer to determine whether a reference to said second cell is appropriate for entry into a formula in said first cell; computer readable code configured to cause a computer to store a current formula in said first cell, if said reference is not appropriate for entry into said formula in said first cell; and computer readable code configured to cause a computer to activate said second cell, if said reference is not appropriate for entry into said formula in said first cell.

The computer readable code of the computer program product may be loaded into a computing device such as a PDA.

The computer program product may further comprise: computer readable code configured to cause a computer to display a formula toolbar when said formula is edited and/or computer readable code configured to cause a computer to close said formula toolbar when said formula is no longer being edited.

The toolbar may comprise: at least one mathematical operator and/or at least one function operator wherein computer readable code may cause the computer to display a function dialogue when said function operator is selected.

Still further, computer readable code may be provided configured to cause a computer to enter said reference in said formula, if said reference is appropriate for entry into said formula in said first cell.

According to another embodiment, a computer program product may comprise: a computer usable medium having computer readable program code embodied therein configured to edit a formula, said computer program product comprising: computer readable code configured to cause a computer to select a cell; and computer readable code configured to cause a computer to enter an editing mode, when an appropriate reference for said formula exists in another selected cell.

Further, said computer readable code configured to cause a computer to enter may comprise: computer readable code configured to cause a computer to display a formula toolbar.

The computer program product may further comprise: computer readable code configured to cause a computer to enter an editing mode, if a user inputs a formula initiator and the computer readable code configured to cause a computer to enter an editing mode, if a user inputs a formula initiator may comprise: computer readable code configured to cause a computer to display a formula toolbar.

According to another embodiment, a computer program product may comprise: a computer usable medium having computer readable program code embodied therein configured to edit a formula, said computer program product comprising: computer readable code configured to cause a computer to activate a formula entry area; computer readable code configured to cause a computer to obtain an input from a user; computer readable code configured to cause a computer to determine whether said input is appropriate for entry into said formula in said formula entry area; and computer readable code configured to cause a computer to store a current formula in said formula entry area, if said input is not appropriate for entry into said formula in said formula entry area. The formula may be a search query.

## Claims

1. A method for editing a spreadsheet formula comprising:
activating a first cell;
selecting a second cell in response to user input;
determining whether a reference to said second cell is appropriate for entry into a formula in said first cell;
storing a current formula in said first cell, if said reference is not appropriate for entry into said formula in said first cell; and
activating said second cell, if said reference is not appropriate for entry into said formula in said first cell.

2. The method of claim 1 further comprising: displaying a formula toolbar when said formula is edited.

3. The method of claim 2 further comprising: closing said formula toolbar when said formula is no longer being edited.

4. The method of at least one of the claims 2 and 3 wherein said formula toolbar comprises: at least one mathematical operator.

5. The method of at least one of the claims 2 to 4 wherein said formula toolbar comprises: at least one function operator.

6. The method of claim 5 further comprising: displaying a function dialogue when said function operator is selected.

7. The method of at least one of the claims 1 to 6 further comprising: entering said reference in said formula, if said reference is appropriate for entry into said formula in said first cell.

8. A method for formula editing comprising:
selecting a cell; and
entering an editing mode, when an appropriate reference for said formula exists in another selected cell.

9. The method of claim 8 further comprising: entering an editing mode, if a user inputs a formula initiator and/or displaying a formula toolbar.

10. A method for formula entry comprising:
activating a formula entry area;
obtaining an input from a user;
determining whether said input is appropriate for entry into a formula in said formula entry area; and
storing a current formula in said formula entry area, if said input is not appropriate for entry into said formula.

11. The method of claim 10 wherein said formula is a search query.

12. A program having instructions adapted to make a computer carry out the method of at least one of the claims 1 - 11.

13. A computer readable medium, in which a program is embodied, where the program is to make a computer execute the method of at least one of the claims 1 - 11.

14. A spreadsheet formula editor comprising:
a first activation device configured to activate a first cell;
a selection device configured to select a second cell in response to user input;
a determiner configured to determine whether a reference to said second cell is appropriate for entry into a formula in said first cell;
a storage unit configured to store a current formula in said first cell, if said reference is not appropriate for entry into said formula in said first cell; and
a first activation device configured to activate said second cell, if said reference is not appropriate for entry into said formula in said first cell.

15. The spreadsheet formula editor of claim 14 further comprising: a formula toolbar wherein said formula toolbar is displayed when said formula is edited.

16. The spreadsheet formula editor of claim 15 wherein said formula toolbar is closed when said formula is no longer being edited.

17. The spreadsheet formula editor of claim 15 wherein said formula toolbar comprises: at least one mathematical operator.

18. The spreadsheet formula editor of claim 15 wherein said formula toolbar comprises: at least one function operator.

19. The spreadsheet formula editor of claim 18 further comprising: a function dialogue wherein said function dialogue is displayed when said function operator is selected.

20. The spreadsheet formula editor of at least one of the claims 14 - 19 wherein said reference is entered in said formula, if said reference is appropriate for entry into said formula in said first cell.

21. A formula editor comprising:
a selection device configured to select a cell; and
an editing mode configured to be entered when an appropriate reference for said formula exists in another selected cell.

22. The formula editor of claim 21 wherein said mode selector comprises: a display unit configured to display a formula toolbar.

23. The formula editor of at least one of the claims 21 and 22 wherein said editing mode is configured to be entered, if a user inputs a formula initiator.

24. The formula editor of claim 23 wherein said second mode selector comprises: a display unit configured to display a formula toolbar.

25. A formula editor comprising:
an activation device configured to activate a formula entry area;
input from a user configured to be obtained;
a determiner configured to determine whether said input is appropriate for entry into a formula in said formula entry area; and
a storage unit configured to store a current formula in said formula entry area, if said input is not appropriate for entry into said formula in said formula entry area.

26. The formula editor of claim 25 wherein said formula is a search query.

27. A computer program product comprising:
a computer usable medium having computer readable program code embodied therein configured to edit a spreadsheet formula, said computer program product comprising:
computer readable code configured to cause a computer to activate a first cell;
computer readable code configured to cause a computer to select a second cell in response to user input;
computer readable code configured to cause a computer to determine whether a reference to said second cell is appropriate for entry into a formula in said first cell;
computer readable code configured to cause a computer to store a current formula in said first cell, if said reference is not appropriate for entry into said formula in said first cell; and
computer readable code configured to cause a computer to activate said second cell, if said reference is not appropriate for entry into said formula in said first cell.

28. The computer program product of claim 27 further comprising: computer readable code configured to cause a computer to display a formula toolbar when said formula is edited.

29. The computer program product of claim 28 further comprising: computer readable code configured to cause a computer to close said formula toolbar when said formula is no longer being edited.

30. The computer program product of at least one of the claims 28 and 29 wherein said toolbar comprises: at least one mathematical operator.

31. The computer program product of at least one of the claims 28 to 30 wherein said toolbar comprises: at least one function operator.

32. The computer program product of claim 31 further comprising: computer readable code configured to cause a computer to display a function dialogue when said function operator is selected.

33. The computer program product of at least one of the claims 27 to 32 further comprising: computer readable code configured to cause a computer to enter said reference in said formula, if said reference is appropriate for entry into said formula in said first cell.

34. A computer program product comprising:
a computer usable medium having computer readable program code embodied therein configured to edit a formula, said computer program product comprising:
computer readable code configured to cause a computer to select a cell; and
computer readable code configured to cause a computer to enter an editing mode, when an appropriate reference for said formula exists in another selected cell.

35. The computer program product of claim 34 wherein said computer readable code configured to cause a computer to enter comprises: computer readable code configured to cause a computer to display a formula toolbar.

36. The computer program product of at least one of the claims 34 and 35 further comprising: computer readable code configured to cause a computer to enter an editing mode, if a user inputs a formula initiator.

37. The computer program product of claim 36 wherein said computer readable code configured to cause a computer to enter an editing mode, if a user inputs a formula initiator comprises: computer readable code configured to cause a computer to display a formula toolbar.

38. A computer program product comprising:
a computer usable medium having computer readable program code embodied therein configured to edit a formula, said computer program product comprising:
computer readable code configured to cause a computer to activate a formula entry area;
computer readable code configured to cause a computer to obtain an input from a user;
computer readable code configured to cause a computer to determine whether said input is appropriate for entry into said formula in said formula entry area; and
computer readable code configured to cause a computer to store a current formula in said formula entry area, if said input is not appropriate for entry into said formula in said formula entry area.

39. The computer program product of claim 38 wherein said formula is a search query.
